# EUROPEAN PATENT APPLICATION

(11) **EP 4 760 944 A1**
(43) Date of publication of application: **17.06.2026**
(21) Application number: 24890003.7
(22) Date of filing: 13.05.2024
(51) Int. Cl.: H01M 50/375

(54) **BATTERY CELL, BATTERY AND ELECTRICAL APPARATUS**

(30) Priority: 16.11.2023 CN 202323101439 U
(71) Applicant: Contemporary Amperex Technology Co., Limited, Ningde, Fujian 352100 (CN)
(72) Inventor: WU, Kai, Ningde, Fujian 352100 (CN); LIU, Shuangxu, Ningde, Fujian 352100 (CN); SHEN, Dan, Ningde, Fujian 352100 (CN)
(74) Representative: Gong, Jinping
(86) International application number: PCT/CN2024/092797
(87) International publication number: WO 2025/102632

(57) **Abstract**

The present application provides a battery cell, a battery, and an electrical apparatus, which belongs to the field of battery technologies. The battery cell includes a shell. The shell has a wall portion, the wall portion is provided with a first weak portion and a pressure relief region, and the wall portion is configured to be capable of cracking along the first weak portion to open the pressure relief region. The wall portion is further provided with a second weak portion, and the pressure relief region is configured to be capable of flipping around the second weak portion when the first weak portion cracks, so as to relieve an internal pressure of the battery cell. The second weak portion is provided on the wall portion, so that the pressure relief region, when opened, is capable of flipping with the second weak portion as an axis, thereby improving an opening effect of the pressure relief region of the wall portion, which is conducive to increasing a pressure relief area of the battery cell after the pressure relief region is opened, and further improving a pressure relief rate of the battery cell when thermal runaway occurs, so as to reduce the risk of fire, explosion, or connection failure of the battery cell due to untimely pressure relief, and is conducive to improving the reliability in use of the battery cell.

## Description

### CROSS-REFERENCE TO RELATED APPLICATIONS

The present application claims priority to Chinese Patent Application No. 2023231014397, entitled "BATTERY CELL, BATTERY, AND ELECTRICAL APPARATUS" and filed on November 16, 2023, the entire content of which is incorporated herein by reference.

### TECHNICAL FIELD

The present application relates to the field of battery technologies, and in particular, to a battery cell, a battery, and an electrical apparatus.

### BACKGROUND

With the development of new-energy technologies, batteries are increasingly widely applied, such as applied in a mobile phone, a laptop, a storage battery car, an electric vehicle, an electric airplane, an electric ship, an electric toy car, an electric toy ship, an electric toy plane, an electric tool, and the like.

In battery technologies, in order to ensure the safety of a battery cell, a pressure relief structure for relieving an internal pressure of a battery cell is generally arranged on a shell of the battery cell, so that when thermal runaway occurs in the battery cell, the pressure relief structure is capable of cracking at a position where a score groove is provided, so as to relieve the internal pressure of the battery cell. However, the existing battery cell has a low pressure relief rate when thermal runaway occurs, so that the battery cell has a risk of fire and explosion due to untimely pressure relief, resulting in low reliability in use of the battery cell.

### SUMMARY

Embodiments of the present application provide a battery cell, a battery, and an electrical apparatus, which are capable of effectively improving the reliability in use of the battery cell.

In a first aspect, an embodiment of the present application provides a battery cell, including a shell; the shell having a wall portion, the wall portion being provided with a first weak portion and a pressure relief region, the wall portion being configured to be capable of cracking along the first weak portion to open the pressure relief region; where the wall portion is further provided with a second weak portion, and the pressure relief region is configured to be capable of flipping around the second weak portion when the first weak portion cracks, so as to relieve an internal pressure of the battery cell.

In the above-mentioned technical solution, the first weak portion and the pressure relief region are provided on the wall portion, and the first weak portion defines the pressure relief region, so that the first weak portion of the wall portion cracks along the first weak portion, so as to open the pressure relief region of the wall portion to relieve the internal pressure of the battery cell, where the second weak portion is provided on the wall portion, so that the pressure relief region, when opened, is capable of flipping with the second weak portion as an axis, thereby improving an opening effect of the pressure relief region of the wall portion, which is conducive to increasing a pressure relief area of the battery cell after the pressure relief region is opened, and further improving a pressure relief rate of the battery cell when thermal runaway occurs, so as to reduce the risk of fire, explosion, or connection failure of the battery cell due to untimely pressure relief, and is conducive to improving the reliability in use of the battery cell.

In some embodiments, in a thickness direction of the wall portion, a thickness of the first weak portion is D₁, and a thickness of the second weak portion is D₂, meeting D₁<D₂.

In the above-mentioned technical solution, by setting the thickness of the first weak portion to be smaller than the thickness of the second weak portion, a strength of the first weak portion is made smaller than that of the second weak portion, so that the wall portion is capable of preferentially cracking at the first weak portion and relieving the internal pressure of the battery cell, thereby being conducive to reducing the risk of cracking of the second weak portion, so that the pressure relief region is capable of flipping around the second weak portion after being opened.

In some embodiments, in the thickness direction of the wall portion, a thickness of the second weak portion is D₂, in a unit of mm, and an energy density of the battery cell is E, in a unit of Wh/Kg, meeting D₂/E≤0.003.

In the above-mentioned technical solution, by setting a ratio of the thickness of the second weak portion to the energy density of the battery cell to be less than or equal to 0.003, the effect of the pressure relief region, after it is opened, flipping around the second weak portion during pressure relief of the battery cell is improved, thereby being capable of increasing the pressure relief area after the pressure relief region is opened, so as to reduce the risk of explosion of the battery cell or connection failure of the shell due to insufficient pressure relief area of the battery cell.

In some embodiments, in the thickness direction of the wall portion, the thickness of the second weak portion is D₂, and the energy density of the battery cell is E, meeting 0.05 mm<D₂<1.5 mm, and 150 Wh/Kg≤E≤450 Wh/Kg.

In the above-mentioned technical solution, by setting the thickness of the second weak portion to be greater than 0.05 mm to improve the structural strength of the second weak portion, it is conducive to reducing the risk of cracking of the second weak portion, so that the pressure relief region is capable of flipping around the second weak portion after being opened. By setting the thickness of the second weak portion to be less than 1.5 mm, it is conducive to improving the effect of flipping around the second weak portion after the pressure relief region is opened, thereby being capable of increasing the pressure relief area after the pressure relief region is opened, so as to improve the pressure relief rate of the battery cell. By setting the energy density of the battery cell to be greater than or equal to 150 Wh/Kg, the battery cell has sufficient energy density, and it is capable of reducing the manufacturing difficulty and cost of the battery cell. By setting the energy density of the battery cell to be less than or equal to 450 Wh/Kg, the phenomenon of untimely pressure relief of the battery cell after thermal runaway can be alleviated, which is conducive to improving the reliability in use of the battery cell.

In some embodiments, in the thickness direction of the wall portion, the thickness of the second weak portion is D₂, and the energy density of the battery cell is E, meeting 0.2 mm≤D₂≤0.8 mm, and 180 Wh/Kg≤E≤350 Wh/Kg.

In the above-mentioned technical solution, by setting the thickness of the second weak portion to be greater than 0.2 mm, on the one hand, it is conducive to reducing the difficulty in processing the second weak portion, and on the other hand, it is capable of further improving the structural strength of the second weak portion, and further reducing the risk of cracking of the second weak portion, so that the pressure relief region, after it is opened, is capable of flipping around the second weak portion. By setting the thickness of the second weak portion to be less than or equal to 0.8 mm, it is conducive to further improving the effect of flipping around the second weak portion after the pressure relief region is opened, thereby being capable of increasing the pressure relief area after the pressure relief region is opened, so as to improve the pressure relief rate of the battery cell. By setting the energy density of the battery cell to be greater than or equal to 180 Wh/Kg, the battery cell further has sufficient energy density, and it is capable of reducing the manufacturing difficulty and cost of the battery cell. By setting the energy density of the battery cell to be less than or equal to 350 Wh/Kg to reduce the situation of an excessively large bursting pressure of the battery cell, it is further capable of alleviating the phenomenon of untimely pressure relief of the battery cell after thermal runaway, and is conducive to improving the reliability in use of the battery cell.

In some embodiments, the wall portion is provided with a first notch groove, a groove bottom wall of the first notch groove forms the first weak portion, and the first notch groove defines the pressure relief region.

In the above-mentioned technical solution, the first notch groove is provided on the wall portion so that the groove bottom wall of the first notch groove forms the first weak portion. That is, the first weak portion is formed in a region of the wall portion where the first notch groove is provided, so that the wall portion is capable of cracking along the first notch groove to open the pressure relief region. It is convenient for the battery cell with such as structure to form the first weak portion on the wall portion, which is conducive to reducing the difficulty in manufacturing the first weak portion.

In some embodiments, the first notch groove includes a first groove section, a second groove section, and a third groove section, where the first groove section and the third groove section are oppositely arranged, the second groove section connects the first groove section and the third groove section, and the first groove section, the second groove section, and the third groove section together define the pressure relief region.

In the above-mentioned technical solution, the first notch groove is provided with the first groove section and the third groove section which are oppositely arranged, and the second groove section connecting the first groove section and the third groove section, so that the wall portion is capable of cracking along the first groove section, the second groove section, and the third groove section during the pressure relief of the battery cell. The first notch groove with such a structure is conducive to further increasing the pressure relief area of the battery cell, so as to improve the pressure relief rate of the battery cell.

In some embodiments, two ends of the second groove section are connected to one end of the first groove section and one end of the third groove section, respectively.

In the above-mentioned technical solution, by connecting the two sides of the second groove section to one end of the first groove section and one end of the third groove section, respectively, so that the first groove section, the second groove section, and the third groove section are structures connected in sequence, and the pressure relief region is located between the first groove section, the second groove section, and the third groove section to form the first notch groove of a "U"-shaped structure, thereby facilitating the pressure relief region to flip around the second weak portion after being opened.

In some embodiments, the first groove section is provided at an obtuse angle to the second groove section; and/or the third groove section is provided at an obtuse angle to the second groove section.

In the above-mentioned technical solution, by setting the angle between the first groove section and the second groove section to an obtuse angle, it is conducive to increase the area of the pressure relief region and facilitate the pressure relief region to flip around the second weak portion after being opened, thereby increasing the pressure relief area of the pressure relief region after being opened, and further improving the pressure relief rate of the battery cell. Likewise, by setting the angle between the third groove section and the second groove section to an obtuse angle, it is conducive to increase the area of the pressure relief region and facilitate the pressure relief region, after it is opened, to flip around the second weak portion, thereby increasing the pressure relief area of the pressure relief region after being opened, and further improving the pressure relief rate of the battery cell.

In some embodiments, the first notch groove includes two first groove sections and two third groove sections, the two first groove sections are both connected to one end of the second groove section and are respectively arranged on both sides of the second groove section, and the two third groove sections are both connected to one end of the second groove section and are respectively arranged on both sides of the second groove section, so that the pressure relief region is formed on each of both sides of the second groove section.

In the above-mentioned technical solution, the first notch groove is provided with two first groove sections and two third groove sections, the two first groove sections are respectively located on both sides of the second groove section, and the two third groove sections are respectively located on both sides of the second groove section, so that the pressure relief region is capable of being formed on each of both sides of the second groove section, and the two pressure relief regions are capable of being opened in a split manner for pressure relief during the pressure relief of the battery cell, which is conducive to further increasing the pressure relief effect of the battery cell and can effectively improve the pressure relief rate of the battery cell.

In some embodiments, the connection position of the first groove section and the second groove section deviates from the two ends of the first groove section, and the connection position of the third groove section and the second groove section deviates from the two ends of the third groove section, so that the pressure relief region is formed on each of both sides of the second groove section.

In the above-mentioned technical solution, by setting the connection position of the first groove section and the second groove section to be located between the two ends of the first groove section, and setting the connection position of the third groove section and the second groove section to be located between the two ends of the third groove section, the first groove section, the second groove section, and the third groove section form a structure similar to an "H" shape, so that the pressure relief region is capable of being formed on each of both sides of the second groove section of the first notch groove, and the two pressure relief regions are capable of being opened in a split manner for pressure relief during the pressure relief of the battery cell, which is conducive to further increasing the pressure relief effect of the battery cell and can effectively improve the pressure relief rate of the battery cell.

In some embodiments, the first groove section and the third groove section are both perpendicular to the second groove section.

In the above-mentioned technical solution, by setting the first groove section and the third groove section to be perpendicular to the second groove section, so that an extension direction of the second groove section is an arrangement direction of the first groove section and the third groove section, on the one hand, the regularity of the shape of the first notch groove is capable of being improved, which is conducive to reduce the difficulty in processing the first notch groove, so as to reduce the manufacturing cost of the battery cell; on the other hand, it is convenient for the two pressure relief regions whose wall portions are located on both sides of the second groove section to relieve pressure in opposite directions during the pressure relief of the battery cell.

In some embodiments, the first notch groove includes a first groove section and a second groove section interconnected to each other, an extension direction of the first groove section intersects an extension direction of the second groove section, and the first groove section and the second groove section together define the pressure relief region.

In the above-mentioned technical solution, by setting the first notch groove to have the first groove section and the second groove section that intersect with each other, and the first groove section and the second groove section together define the pressure relief region, on the one hand, the pressure relief area of the battery cell is capable of being increased to increase the pressure relief rate of the battery cell, and on the other hand, an intersection position of the first groove section and the second groove section is made weaker, and is easier to crack and open the pressure relief region to relieve the internal pressure of the battery cell.

In some embodiments, one end of the first groove section is connected to one end of the second groove section.

In the above-mentioned technical solution, by connecting the one end of the first groove section to one end of the second groove section, so that the first groove section and the second groove section are structures connected in sequence, and the first groove section and the second groove section form a "V"-shaped structure, which facilitates the pressure relief region formed between the first groove section and the second groove section to flip around the second weak portion after being opened.

In some embodiments, the first notch groove is a groove extending along an arc trajectory.

In the above-mentioned technical solution, by setting the first notch groove to be a structure extending along an arc trajectory so that the pressure relief region is formed on one side of the first notch groove, the first notch groove with such a structure is convenient for manufacturing and molding, and is conducive to reducing the difficulty in manufacturing the battery cell.

In some embodiments, in the thickness direction of the wall portion, the first notch groove is provided on one side of the wall portion facing away from an interior of the shell.

In the above-mentioned technical solution, by arranging the first notch groove on the side of the wall portion facing away from the interior of the shell, the first notch groove is a structure formed on the outside of the shell, which facilitates processing and manufacturing of the first notch groove from the outside of the shell, and helps reduce the difficulty in processing the first notch groove.

In some embodiments, the first notch groove is a multi-step groove structure arranged in the thickness direction of the wall portion.

In the above-mentioned technical solution, by setting the first notch groove as the multi-step groove arranged in the thickness direction of the wall portion, so that the first notch groove is a groove structure formed by multiple times of processing, the battery cell with such a structure, on the one hand, is capable of reducing the depth of the first notch groove in a single processing, which is conducive to reducing the difficulty in manufacturing the first notch groove and the demand for a manufacturing device, so as to reduce the manufacturing cost, and is capable of reducing a forming force exerted on the wall portion during the single processing of the first notch groove, which is conducive to reducing the risk of cracks in the wall portion, so as to improve the production quality of the battery cell. On the other hand, it is capable of improving a material flow pattern of the first notch groove in the formation process, which is beneficial for the flow of a material generated when forming the first notch groove, so as to improve the structural consistency of the first notch groove.

In some embodiments, the wall portion is provided with a second notch groove, a groove bottom wall of the second notch groove forms the second weak portion.

In the above-mentioned technical solution, the second notch groove is provided on the wall portion so that the groove bottom wall of the second notch groove forms the second weak portion. That is, the second weak portion is formed in a region of the wall portion where the second notch groove is provided, so that the pressure relief region is capable of flipping around the groove bottom wall of the second notch groove after being opened. It is convenient for the battery cell with such as structure to form the second weak portion on the wall portion, which is conducive to reducing the difficulty in manufacturing the second weak portion.

In some embodiments, in the thickness direction of the wall portion, the second notch groove is provided on one side of the wall portion facing interior of the shell.

In the above-mentioned technical solution, the second notch groove is provided on the side of the wall portion facing the interior of the shell, so that the pressure relief region, when opened, can flip toward the outside of the shell around the groove bottom wall of the second notch groove, thereby reducing an interference effect of a groove side surface of the second notch groove on the pressure relief region during the flipping, which is conducive to improving the flipping effect of the pressure relief region.

In some embodiments, the wall portion is provided with a first notch groove and a second notch groove, a groove bottom wall of the first notch groove forms the first weak portion, and a groove bottom wall of the second notch groove forms the second weak portion; where the first notch groove and the second notch groove are not in contact.

In the above-mentioned technical solution, by arranging the first notch groove and the second notch groove on the wall portion, the first weak portion and the second weak portion are respectively formed in the regions of the wall portion where the first notch groove and the second notch groove are arranged, the structure is simple, and is convenient for manufacturing. In addition, by setting the first notch groove and the second notch groove as structures that do not contact each other, on the one hand, the mutual influence between the first notch groove and the second notch groove during the processing is capable of being reduced, and on the other hand, the phenomenon of causing the second weak portion to crack when the first weak portion cracks for pressure relief can be reduced, and the stress influence between the first weak portion and the second weak portion can be reduced.

In some embodiments, in the thickness direction of the wall portion, the first notch groove and the second notch groove are arranged on both sides of the wall portion, respectively.

In the above-mentioned technical solution, by arranging the first notch groove and the second notch groove on both sides of the wall portion respectively, the first notch groove and the second notch groove do not contact each other, and it is convenient to process the first notch groove and the second notch groove, which is conducive to reducing the mutual influence of the first notch groove and the second notch groove during the processing.

In some embodiments, the shell includes a case and an end cover. The case includes a side wall and a bottom wall formed integrally; the side wall encloses the periphery of the bottom wall; one end of the side wall is connected to the bottom wall, and the other end encloses to form an opening; the side wall and the bottom wall together define an accommodating cavity for accommodating an electrode assembly; and the end cover closes the opening, where the bottom wall is the wall portion.

In the above-mentioned technical solution, by arranging the wall portion as a wall of the case arranged opposite to the end cover in the thickness direction of the wall portion, the battery cell with such a structure is capable of causing the regions of the shell where the first weak portion and the second weak portion are arranged far from the end cover, and causing that there is no direct connection relationship between the wall portion and the end cover, thereby being capable of alleviating the influence of the stress generated during interconnection of the end cover and the case on the first weak portion and the second weak portion, so as to reduce the phenomenon of cracking or reduction in structural strength the first weak portion and the second weak portion, and further be capable of effectively reducing the situation of prematurely opening the valve for pressure relief of the battery cell, so as to improve the stability and service life of the battery cell.

In some embodiments, the shell includes the case and the end cover, the accommodating cavity having an opening is formed in the interior of the case, and the accommodating cavity is configured to accommodate the electrode assembly; and the end cover closes the opening, where the end cover is the wall portion.

In the above-mentioned technical solution, by setting the wall portion of the shell as the end cover of the shell for closing the opening of the case, the battery cell with such a structure is conducive to processing to form the first weak portion and the second weak portion on the end cover, which is capable of effectively reducing the difficulty in processing the first weak portion and the second weak portion on the shell of the battery cell, so as to improve the production efficiency of the battery cell.

On a second aspect, an embodiment of the present application further provides a battery, including the above-mentioned battery cell.

In a third aspect, an embodiment of the present application further provides an electrical apparatus, including the above-mentioned battery cell, the battery cell being configured to provide electric energy.

### DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle according to some embodiments of the present application;
FIG. 2 is an exploded structural view of a battery according to some embodiments of the present application;
FIG. 3 is an exploded structural view of a battery cell according to some embodiments of the present application;
FIG. 4 is a schematic structural view of a case of a shell of a battery cell according to some embodiments of the present application;
FIG. 5 is a bottom view of a case of a shell of a battery cell according to some embodiments of the present application;
FIG. 6 is a partial sectional view of a case of a shell of a battery cell according to some embodiments of the present application;
FIG. 7 is a partial enlarged view of a position A of the case shown in FIG. 6;
FIG. 8 is a bottom view of a case of a shell of a battery cell according to other embodiments of the present application;
FIG. 9 is a bottom view of a case of a shell of a battery cell according to still other embodiments of the present application; and
FIG. 10 is a bottom view of a case of a shell of a battery cell according to yet other embodiments of the present application.

Reference numerals: 1000-Vehicle; 100-Battery; 10-Box; 11-First box body; 12-Second box body; 20-Battery cell; 21-Shell; 211-Wall portion; 2111-First weak portion; 2112-Pressure relief region; 2113-Second weak portion; 2114-First notch groove; 2114a-First groove section; 2114b-Second groove section; 2114c-Third groove section; 2115-Second notch groove; 212-Case; 2121-Accommodating cavity; 2122-Opening; 2123-Bottom wall; 2124-Side wall; 213-End cover; 22-Electrode assembly; 221-Tab; 23-Electrode terminal; 200-Controller; 300-Motor; X-Thickness direction of the wall portion.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, baked carbon, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds.

In some embodiments, the positive electrode may adopt a foam metal. The foam metal may be foam nickel, foam copper, foam aluminum, a foam alloy, or the like. When the foam metal is used as the positive electrode, a surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

As an example, the negative electrode current collector may adopt a metal foil, a foam metal, or a composite current collector. For example, as the metal foil, silver-coated aluminum or stainless steel, stainless steel, copper, aluminum, nickel, baked carbon, nickel, titanium, or the like can be used. The foam metal may be foam nickel, foam copper, foam aluminum, a foam alloy, or the like. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some embodiments, the electrode assembly further includes a spacer, and the spacer is arranged between the positive electrode and the negative electrode.

In some embodiments, the spacer is a separator. There may be various types of separators, and any well-known separator with a porous structure having good chemical stability and mechanical stability may be selected.

For example, the material of the separator may include at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some embodiments, the spacer is a solid electrolyte. The solid electrolyte is arranged between the positive electrode and the negative electrode, and plays roles in transmitting ions and isolating the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly is of a wound structure. The positive electrode plate and the negative electrode plate are wound into the wound structure.

In some implementations, the electrode assembly is of a laminated structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some implementations, the electrode assembly is provided with a tab. The tab may conduct current out from the electrode assembly. The tabs include a positive tab and a negative tab.

In some embodiments, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell in another shape. The prismatic battery cell includes, but is not limited to, a square-shell battery cell, a blade-shaped battery cell, and a polygon prism battery. For example, the polygon prism battery may be a hexagonal prism battery.

A battery mentioned in the embodiments of the present application refers a single physical module including one or more battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage cabinet, or the like.

The battery has outstanding advantages such as high energy density, low environmental pollution, high power density, long service life, wide application range, and low self-discharge coefficient, thus being an important component for the current development of new energy. In the development of the battery technologies, it is needed to consider many design factors at the same time, such as energy density, cycle life, discharge capacity, charge-discharge rate, and other performance parameters. In addition, it is also necessary to consider the safety of batteries.

For a common battery cell, a pressure relief structure is generally arranged on a shell of the battery cell, so that the pressure relief structure is capable of cracking when thermal runaway occurs in the battery cell, to relieve an internal pressure of the battery cell, thereby being conducive to improving the safety in use of the battery cell. In the related art, in order to improve the structural strength and stability of the pressure relief structure provided on the shell, an integrated molding process, such as a stamping process, is usually adopted to form the pressure relief structure on the shell, so that a notch groove is provided on the shell to form the pressure relief structure on the shell. In order to facilitate the pressure relief of the pressure relief structure, the notch groove is usually provided to be an "H" or "Y" type structure, so that a region of the wall portion surrounded by the notch groove is capable of flipping and opening after cracking along the notch groove, so as to increase the pressure relief area of the battery cell. However, due to the thickness of the shell, even if the region of the wall portion surrounded by the notch groove cracks along the notch groove, it cannot effectively flip, so that the pressure relief area of the battery cell is still small, resulting in a low pressure relief rate of the battery cell when thermal runaway occurs, and causing the battery cell to have the risk of fire and explosion or connection failure due to untimely pressure relief, which in turn leads to low reliability in use of the battery cell.

Based on the above-mentioned considerations, in order to solve the problem of low reliability in use of battery cells, an embodiment of the present application provides a battery cell, and the battery cell includes a shell. The shell has a wall portion, the wall portion is provided with a first weak portion and a pressure relief region, and the wall portion is configured to be capable of cracking along the first weak portion to open the pressure relief region. The wall portion is further provided with a second weak portion, and the pressure relief region is configured to be capable of flipping around the second weak portion when the first weak portion cracks, so as to relieve an internal pressure of the battery cell.

In the battery cell with such a structure, the first weak portion and the pressure relief region are provided on the wall portion, and the first weak portion defines the pressure relief region, so that the first weak portion of the wall portion cracks along the first weak portion, so as to open the pressure relief region of the wall portion to relieve the internal pressure of the battery cell, where the second weak portion is provided on the wall portion, so that the pressure relief region, when opened, is capable of flipping with the second weak portion as an axis, thereby improving an opening effect of the pressure relief region of the wall portion, which is conducive to increasing a pressure relief area of the battery cell after the pressure relief region is opened, and further improving a pressure relief rate of the battery cell when thermal runaway occurs, so as to reduce the risk of fire, explosion, or connection failure of the battery cell due to untimely pressure relief, and is conducive to improving the reliability in use of the battery cell.

The battery cell disclosed in the embodiments of the present application can be used, but are not limited to, in electrical apparatuses such as vehicles, ships, or aircrafts. A power supply system of the electrical apparatus can be composed of battery cells, batteries, and other components disclosed in the present application, which is conducive to alleviate the problem of fire and explosion caused by untimely pressure relief of the battery cell, so as to improve the reliability in use of the battery cell.

An embodiment of the present application provides an electrical apparatus with a battery used as a power source. The electrical apparatus may be, but is not limited to, a mobile phone, a tablet, a laptop, an electric toy, an electric tool, a storage battery car, an electric vehicle, a ship, a spacecraft, or the like. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For convenience of description, the following embodiments are illustrated by taking an example in which an electrical apparatus according to an embodiment of the present application is a vehicle.

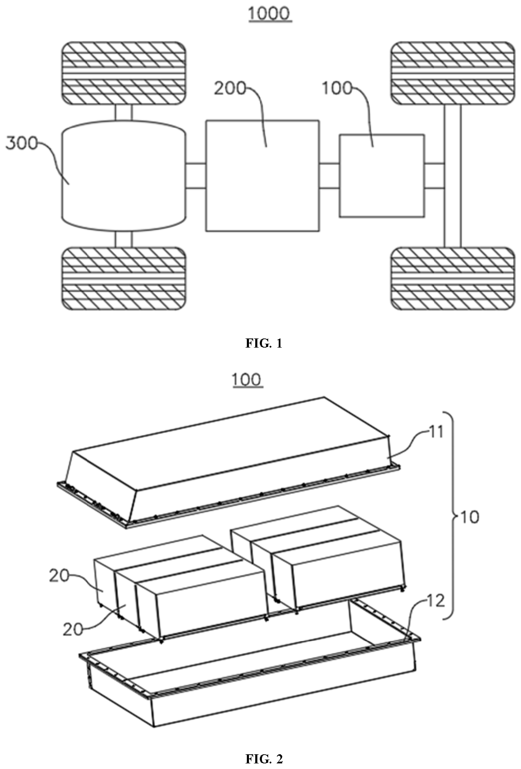

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range vehicle, or the like. A battery 100 is provided in the vehicle 1000. The battery 100 may be arranged at the bottom of the vehicle 1000, or the head of the vehicle 1000, or the tail of the vehicle 1000. The battery 100 may be configured to supply power to the vehicle 1000. For example, the battery 100 may be used as an operating power source or usage power source for the vehicle 1000. The vehicle 1000 may further include a controller 200 and a motor 300. The controller 200 is used for controlling the battery 100 to supply power to the motor 300, for example, to satisfy the operating power demand when the vehicle 1000 is starting, navigating, and traveling.

In some embodiments of the present application, the battery 100 can not only be used as the operating power source or usage power source for the vehicle 1000, but also as the driving power source for the vehicle 1000 to replace or partially replace fuel or natural gas to provide driving power for the vehicle 1000.

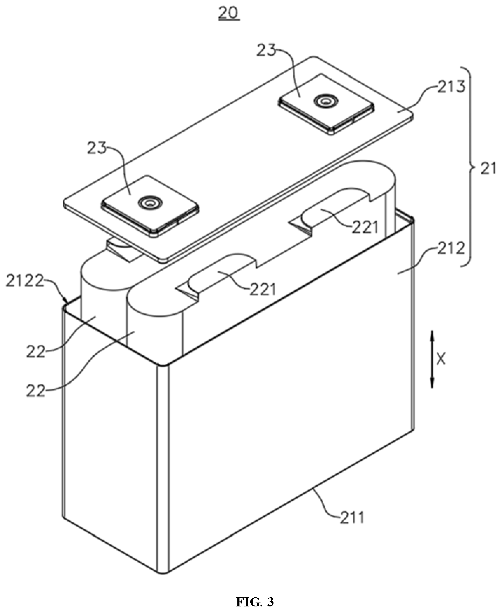

Referring to FIG. 2 and FIG. 3, FIG. 2 is an exploded structural view of a battery 100 according to some embodiments of the present application, and FIG. 3 is an exploded structural view of a battery cell 20 according to some embodiments of the present application. The battery 100 includes a box body 10 and battery cells 20, and the battery cells 20 are accommodated in the box body 10.

Where the box body 10 is configured to provide an assembling space for the battery cells 20, and the box body 10 may be of various structures. In some embodiments, the box body 10 may include a first box body 11 and a second box body 12. The first box body 11 and the second box body 12 cover each other, and the first box body 11 and the second box body 12 together define an assembling space for accommodating the battery cell 20. The second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box body 10 formed by the first box body 11 and the second box body 12 may be in various shapes, such as a cylinder, a cuboid, or a cube. Exemplarily, in FIG. 2, the box body 10 is in a cuboid shape.

In the battery 100, one or a plurality of battery cells 20 may be arranged in the box body 10. If a plurality of battery cells 20 are arranged in the box body 10, the plurality of battery cells 20 may be connected in series, parallel or series and parallel, where the series-parallel connection means that some of the plurality of battery cells 20 are connected in series and some are connected in parallel. The plurality of battery cells 20 may be directly connected in series, parallel or series and parallel together, and then, the whole formed by the plurality of battery cells 20 is accommodated in the box body 10. Of course, the battery 100 may also be in the form of a battery module composed of a plurality of battery cells 20 in series, parallel or series and parallel first, and then, a plurality of battery modules are connected in series, parallel or series and parallel to form a whole which is accommodated in the box body 10.

In some embodiments, the battery 100 may further include other structures. For example, the battery 100 may further include a convergence component, and the plurality of battery cells 20 may be connected through the convergence component so as to achieve electrical connection between the plurality of battery cells 20. The convergence component plays the role of connecting a plurality of battery cells 20 in series, in parallel, or in parallel-series. The material of the convergence component may be copper, iron, aluminum, steel, aluminum alloy, or the like.

Each battery cell 20 may be a secondary battery or a primary battery, or may be a lithium-sulfur battery, a sodium-ion battery, or a magnesium-ion battery, but is not limited thereto. The battery cell 20 may be in a cuboid shape, a cylinder shape, a prism shape, or other shapes. For example, in FIG. 3, the battery cell 20 is a cuboid structure.

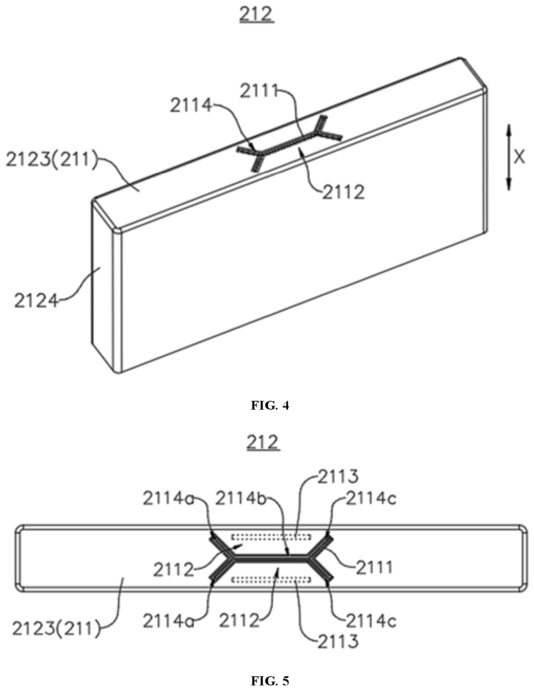

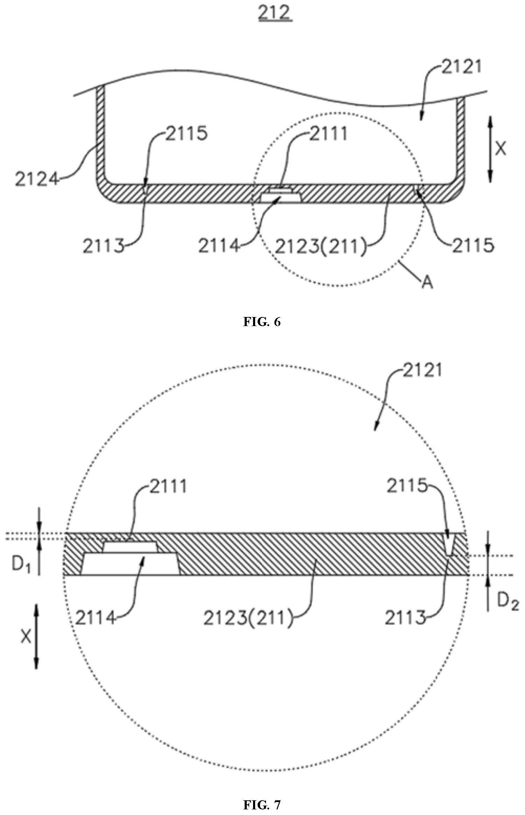

According to some embodiments of the present application, referring to FIG. 3, and further referring to FIG. 4, FIG. 5, FIG. 6, and FIG. 7, FIG. 4 is a schematic structural view of a case 212 of a shell 21 of a battery cell 20 according to some embodiments of the present application, FIG. 5 is a bottom view of a case 212 of a shell 21 of a battery cell 20 according to some embodiments of the present application, FIG. 6 is a partial sectional view of a case 212 of a shell 21 of a battery cell 20 according to some embodiments of the present application, and FIG. 7 is a partial enlarged view of a position A of the case 212 shown in FIG. 6. The present application provides a battery cell 20, and the battery cell 20 includes a shell 21. The shell 21 has a wall portion 211, the wall portion 211 is provided with a first weak portion 2111 and a pressure relief region 2112, and the wall portion 211 is configured to be capable of cracking along the first weak portion 2111 to open the pressure relief region 2112. The wall portion 211 is further provided with a second weak portion 2113, and the pressure relief region 2112 is configured to be capable of flipping around the second weak portion 2113 when the first weak portion 2111 cracks, so as to relieve an internal pressure of the battery cell 20.

The battery cell 20 may further include an electrode assembly 22. The electrode assembly 22 is accommodated in the shell 21, and the electrode assembly 22 is a component of the battery cell 20 where an electrochemical reaction occurs. Similarly, the shell 21 can also be used to accommodate an electrolyte, such as an electrolyte solution. The shell 21 may have various structural forms. The shell 21 may also be made of various materials, such as copper, iron, aluminum, steel, and aluminum alloy.

In some embodiments, the shell 21 may include a case 212 and an end cover 213. An accommodating cavity 2121 is formed inside the case 212, the accommodating cavity 2121 has an opening 2122. In other words, the case 212 is of a hollow structure having one end open, and the end cover 213 covers the opening 2122 of the case 212 and forms a sealed connection to form a sealed space for accommodating the electrode assembly 22 and the electrolyte. For example, the end cover 213 is connected to the case 212 by welding.

Optionally, the case 212 may include a bottom wall 2123 and a side wall 2124 formed integrally. The side wall 2124 is provided around the periphery of the bottom wall 2123. One end of the side wall 2124 is connected to the bottom wall 2123, and the other end encloses to form the opening 2122. The end cover 213 covers the opening 2122 and is provided opposite to the bottom wall 2123.

Optionally, the wall portion 211 provided with the first weak portion 2111 and the pressure relief region 2112 may be the end cover 213, or may be one wall of the plurality of walls of the shell 212. For example, in FIG. 3 and FIG. 4, the wall portion 211 is the bottom wall 2123 of the case 212. Of course, in other embodiments, the wall portion 211 may also be the end cover 213 of the shell 21 or the side wall 2124 of the case 212 that is adjacent to and abuts against the end cover 213.

When the battery cell 20 is assembled, the electrode assembly 22 may be placed in the case 212 first, the case 212 is filled with the electrolyte, and the end cover 213 covers the opening 2122 of the case 212, to close the opening 2122 of the case 212.

The case 212 may be of various shapes, such as a cylinder and a cuboid. The shape of the case 212 may be determined according to the specific shape of the electrode assembly 22. For example, if the electrode assembly 22 is of a cylindrical structure, the case 212 may select a cylindrical structure; and if the electrode assembly 22 is of a rectangular structure, the case 212 may select a rectangular structure. Of course, the end cover 213 may have various structures. For example, the end cover 213 may be a plate-like structure or a hollow structure with one end open. For example, in FIG. 4, the case 212 is of a cuboid structure, and the end cover 213 is of a plate structure.

It is understandable that the shell 21 is not merely limited to the above structure, and the shell 21 may also be of other structures. For example, the shell 21 includes a case 212 and two end covers 213, the case 212 is of a hollow structure with openings 2122 on two opposite sides, and each end cover 213 correspondingly covers each opening 2122 of the case 212 and forms a sealed connection, to form a sealed space for accommodating the electrode assembly 22 and the electrolyte.

In FIG. 3 and FIG. 4, the wall portion 211 is provided with a first weak portion 2111 and a pressure relief region 2112. The first weak portion 2111 is a structure arranged along an edge of the pressure relief region 2112, so that a setting trajectory of the first weak portion 2111 is set along the edge of the pressure relief region 2112, so that the wall portion 211 is capable of cracking along the edge of the pressure relief region 2112.

The wall portion 211 is configured to be capable of cracking along the first weak portion 2111 to open the pressure relief region 2112. That is, when the battery cell 20 undergoes thermal runaway and relieves the internal pressure, the region of the wall portion 211 where the first weak portion 2111 is provided is capable of cracking, so that the pressure relief region 2112 is capable of being opened to relieve the internal pressure of the battery cell 20.

The wall portion 211 is further provided with a second weak portion 2113, and the pressure relief region 2112 is configured to be capable of flipping around the second weak portion 2113 when the first weak portion 2111 cracks. In other words, the second weak portion 2113 is further formed on the wall portion 211, so that the pressure relief region 2112, when opened, is capable of flipping with the second weak portion 2113 as an axis, so that after the pressure relief region 2112 flips, the interior of the shell 21 is in communication with the exterior of the shell 21 for pressure relief.

For example, in FIG. 5 and FIG. 6, a first notch groove 2114 and a second notch groove 2115 are provided on the wall portion 211, and a groove bottom wall 2123 of the first notch groove 2114 forms a first weak portion 2111, and a groove bottom wall 2123 of the second notch groove 2115 forms a second weak portion 2113. Of course, in other embodiments, the first weak portion 2111 and the second weak portion 2113 may also be of other structures. For example, by heat treating a local region of the wall portion 211 to weaken the strength of the region, the first weak portion 2111 and the second weak portion 2113 are formed.

For example, the first notch groove 2114 may be formed by a processing technique such as stamping or milling, and similarly, the second notch groove 2115 may also be formed by a processing technique such as stamping or milling.

It should be noted that, the electrode assembly 22 is a component of the battery cell 20 where an electrochemical reaction occurs. The electrode assembly 22 may have various structures, for example, the electrode assembly 22 may be of a wound structure formed by winding a positive electrode plate, a spacer, and a negative electrode plate, or a stacked structure formed by stacking a positive electrode plate, a spacer, and a negative electrode plate.

For example, the spacer is a separator, and the main material of the separator may be selected from at least one of glass fiber, non-woven fabric, polyethylene, polypropylene, and polyvinylidene fluoride.

Optionally, one or a plurality of electrode assemblies 22 may be accommodated in the shell 21. For example, in FIG. 3, the shell 21 of the battery cell 20 is provided with two electrode assemblies 22, and the two electrode assemblies 22 are stacked in a thickness direction thereof. In other words, the two electrode assemblies 22 are stacked in the thickness direction of the battery cell 20. Of course, in other embodiments, there may be one, three, four, five, six, seven, eight, or more electrode assemblies 22 accommodated in the shell 21.

In some embodiments, the battery cell 20 may further include an electrode terminal 23. The electrode terminal 23 is installed on the shell 21 in an insulated manner, and the electrode terminal 23 is electrically connected to the electrode assembly 22 to input or output electric energy of the battery cell 20.

It should be noted that the electrode terminal 23 is installed on the shell 21 in an insulated manner, that is, no electrical connection is formed between the electrode terminal 23 and the shell 21.

In FIG. 3, the battery cell 20 includes two electrode terminals 23, and correspondingly, each electrode assembly 22 has two tabs 221, and the two tabs 221 have opposite polarities. The two electrode terminals 23 are electrically connected to the two tabs 221 of the electrode assembly 22, respectively, to realize the input or output of the positive and negative electrodes of the battery cell 20. It should be noted that the tab 221 of the electrode assembly 22 is a component formed by stacking and connecting regions on the positive electrode plate that are not coated with a positive electrode active material layer or a component formed by stacking and connecting regions on the negative electrode plate that are not coated with a negative electrode active material layer. If the tab 221 is used to output the positive electrode of the electrode assembly 22, the tab 221 is the component formed by stacking and connecting the regions on the positive electrode plate that are not coated with the positive electrode active material layer. If the tab 221 is used to output the negative electrode of the electrode assembly 22, the tab 221 is the component formed by stacking and connecting the regions on the negative electrode plate that are not coated with the negative electrode active material layer.

Optionally, the electrode terminal 23 may be installed on the shell 21 in various structures. For example, in FIG. 3, the two electrode terminals 23 are both installed on the end cover 213 of the shell 21. Correspondingly, the two tabs 221 of the electrode assembly 22 are both arranged at one end of the electrode assembly 22 facing the end cover 213. Of course, the structure of the battery cell 20 is not merely limited to this. In other embodiments, the two electrode terminals 23 may also be installed on the case 212 of the shell 21, for example, the bottom wall 2123 or the side wall 2124 of the case 212. Likewise, for the two electrode terminals 23, one electrode terminal 23 may be installed on the case 212 of the shell 21 and the other electrode terminal 23 may be installed on the end cover 213 of the shell 21.

For example, the electrode terminal 23 functions to input or output electric energy of the battery cell 20, and the electrode terminal 23 may be made of various materials. For example, the material of the electrode terminal 23 may be copper, iron, aluminum, steel, aluminum alloy, or the like.

The first weak portion 2111 and the pressure relief region 2112 are provided on the wall portion 211, and the first weak portion 2111 defines the pressure relief region 2112, so that the first weak portion 2111 of the wall portion 211 cracks along the first weak portion 2111, so as to open the pressure relief region 2112 of the wall portion 211 to relieve the internal pressure of the battery cell 20, where the second weak portion 2113 is provided on the wall portion 211, so that the pressure relief region 2112, when opened, is capable of flipping with the second weak portion 2113 as an axis, thereby improving an opening effect of the pressure relief region 2112 of the wall portion 211, which is conducive to increasing a pressure relief area of the battery cell 20 after the pressure relief region 2112 is opened, and further improving a pressure relief rate of the battery cell 20 when thermal runaway occurs, so as to reduce the risk of fire, explosion, or connection failure of the battery cell 20 due to untimely pressure relief, and is conducive to improving the reliability in use of the battery cell 20.

According to some embodiments of the present application, referring to FIG. 7, in a thickness direction X of the wall portion, a thickness of the first weak portion 2111 is D₁, and a thickness of the second weak portion 2113 is D₂, meeting D₁<D₂.

In an embodiment in which the wall portion 211 is provided with the first notch groove 2114 and the second notch groove 2115 to form the first weak portion 2111 and the second weak portion 2113, the thickness of the first weak portion 2111 is the thickness of the groove bottom wall 2123 of the first notch groove 2114, that is, the thickness of the first weak portion 2111 is the residual thickness of the wall portion 211 in the region where the first notch groove 2114 is provided. Correspondingly, the second weak portion 2113 is the thickness of the groove bottom wall 2123 of the second notch groove 2115, that is, the second weak portion 2113 is the residual thickness of the wall portion 211 in the region where the second notch groove 2115 is provided.

By setting the thickness of the first weak portion 2111 to be smaller than the thickness of the second weak portion 2113, a strength of the first weak portion 2111 is made smaller than that of the second weak portion 2113, so that the wall portion 211 is capable of preferentially cracking at the first weak portion 2111 and relieving the internal pressure of the battery cell 20, thereby being conducive to reducing the risk of cracking of the second weak portion 2113, so that the pressure relief region 2112 is capable of flipping around the second weak portion 2113 after being opened.

According to some embodiments of the present application, referring to FIG. 5 and FIG. 7, in the thickness direction X of the wall portion, a thickness of the second weak portion 2113 is D₂, in a unit of mm, and an energy density of the battery cell 20 is E, in a unit of Wh/Kg, meeting D₂/E≤0.003.

The energy density of the battery cell 20 is a ratio of the electrical energy to the weight of the battery cell 20.

In order to make the technical problems addressed by, the technical solutions, and the beneficial effects of the embodiments of the present application clearer, detailed description will be further made below with reference to Embodiments 1 to 8 and Comparative Examples 1 to 8. Apparently, the described embodiments are merely a part of embodiments of the present application, instead of all embodiments. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

### Embodiment 1

### 1) Preparation of positive electrode plate

A positive electrode active material LiNi_{0.7}Co_{0.1}Mn_{0.1}O₂, a conductive agent Super P, and a binder polyvinylidene fluoride (PVDF) are prepared into a positive electrode slurry in N-methyl-2-pyrrolidone (NMP). A solid content in the positive electrode slurry is 50 wt%, and a mass ratio of LiNi_{0.7}Co_{0.1}Mn_{0.1}O₂, Super P, and PVDF in the solid components is 8:1:1. The positive electrode slurry is coated on upper and lower surfaces of a current collector aluminum foil and dried at 85°C and then cold pressed. Then, it is trimmed, cut into pieces, and divided into strips, and then dried under a vacuum condition at 85°C for 4 hours to prepare a positive electrode plate.

### 2) Preparation of negative electrode plate

Graphite, a conductive agent Super P, a thickener carboxymethyl cellulose (CMC), and an adhesive styrene-butadiene rubber (SBR) are mixed evenly in deionized water to prepare a negative electrode slurry. A solid content in the negative electrode slurry is 30 wt%, and a mass ratio of the graphite, the silicon oxide, the Super P, the CMC, and the adhesive styrene-butadiene rubber (SBR) in the solid components is 88:7:3:2. The negative electrode slurry is coated on upper and lower surfaces of a current collector copper foil and dried at 85°C. Then, it is cold pressed, trimmed, cut into pieces, and divided into strips, and then dried under a vacuum condition at 120°C for 12 hours to prepare a negative electrode plate.

### 3) Preparation of electrolyte

In an argon atmosphere glove box (H2O<0.1 ppm, O2<0.1 ppm), fully dried electrolyte salt LiPF6 is dissolved in a mixed solvent (the mixed solvent includes ethylene carbonate (EC) and diethyl carbonate (DEC), and ethylene carbonate (EC) and diethyl carbonate (DEC) are mixed in a mass ratio of 50:50), and mixed evenly to obtain a liquid electrolyte with a concentration of 1 mol/L.

### 4) Spacer

A 16 µm polyethylene film is used as a separator.

### 5) Preparation of a battery cell 20

The positive electrode plate, the separator, and the negative electrode plate are stacked in order, so that the separator is located between the positive electrode plate and the negative electrode plate to isolate the positive electrode plate from the negative electrode, and an electrode assembly 22 is obtained by winding them. Tabs 221 are welded, the electrode assembly 22 is placed in an aluminum shell 21, and the prepared electrolyte is injected into the dried shell 21, followed by processes such as encapsulation, standing, formation, shaping, and capacity testing to complete the preparation of the battery cell 20 (the shell 21 of the battery cell 20 has a length of 220 mm, a width of 44 mm, and a height of 100 mm, and the shape of the first notch groove 2114 is a double "Y" shape). The thickness D₂ of the second weak portion 2113 of the battery cell 20 of Embodiment 1 is 0.06 mm, and the energy density E of the battery cell 20 is 100 Wh/Kg.

The preparation methods of the battery cells 20 in Embodiments 2 to 8 and Comparative Examples 1 to 8 are the same as that in Embodiment 1, except that the thickness D₂ of the second weak portion 2113 and the energy density E of the battery cell 20 are different, as shown in Table 1.

The following thermal runaway experiments are conducted on the ratio of the thickness D₂ of the second weak portion 2113 to the energy density E of the battery cell 20 under different conditions through Embodiments 1 to 8 and Comparative Examples 1 to 8, to test the connection between the case 212 and the end cover 213 of the shell 21 after the first weak portion 2111 of the battery cell 20 cracks and the pressure relief region 2112 flips around the second weak portion 2113 to relieve the internal pressure of the battery cell 20. The specific experimental process is as follows:

In the first step, after the winding process of the electrode assembly 22 of the battery cell 20 is completed, a heating plate is arranged on a surface of the electrode assembly 22 (the dimension of the heating plate is 30 mm×300 mm, the resistance is 5 Ω, and the material is Cu+Pi film). A battery cell 20 with two electrode assemblies 22 stacked inside the shell 21 is selected, and the heating plate is arranged between the electrode assembly 22 and the wall with the largest area of the shell 21.

In the second step, a leading wire of the heating plate is led through a wire outlet hole reserved on the shell 21 of the battery cell 20, the wire outlet hole is sealed with a sealing member or a sealant, and the assembling process of the battery cell 20 is completed according to the above arrangement.

In the third step, the heating plate of the battery cell 20 in the 100% fully charged state is connected to a charge-discharge machine by the leading wire, and the voltage is adjusted to 40 V and the current is adjusted to 10 A to heat the heating plate, thereby inducing thermal runaway of the battery cell 20.

In the fourth step, the connection between the case 212 and the end cover 213 of the shell 21 after the first weak portion 2111 of the battery cell 20 cracks and the pressure relief region 2112 flips around the second weak portion 2113 to relieve the internal pressure of the battery cell 20 is observed for Embodiments 1 to 8 and Comparative Examples 1 to 8. The experimental results are shown in Table 1 as follows.

**Table 1**

| Serial number | D₂ (mm) | E (Wh/Kg) | D₂/E | Experimental result |
|---|---|---|---|---|
| Embodiment 1 | 0.06 | 100 | 0.0006 | The shell 21 remains intact |
| Embodiment 2 | 0.1 | 150 | 0.000667 | The shell 21 remains intact |
| Embodiment 3 | 0.2 | 180 | 0.001111 | The shell 21 remains intact |
| Embodiment 4 | 0.5 | 250 | 0.002 | The shell 21 remains intact |
| Embodiment 5 | 0.8 | 350 | 0.002286 | The shell 21 remains intact |
| Embodiment 6 | 1 | 380 | 0.002632 | The shell 21 remains intact |
| Embodiment 7 | 1.2 | 400 | 0.003 | The shell 21 remains intact |
| Embodiment 8 | 1.4 | 450 | 0.003111 | The shell 21 remains intact |
| Comparative Example 1 | 0.5 | 100 | 0.005 | The connection between the case 212 and the end cover 213 fails |
| Comparative Example 2 | 0.8 | 150 | 0.005333 | The connection between the case 212 and the end cover 213 fails |
| Comparative Example 3 | 1 | 180 | 0.005556 | The connection between the case 212 and the end cover 213 fails |
| Comparative Example 4 | 1.2 | 250 | 0.0048 | The connection between the case 212 and the end cover 213 fails |
| Comparative Example 5 | 1.5 | 350 | 0.004286 | The connection between the case 212 and the end cover 213 fails |
| Comparative Example 6 | 1.6 | 380 | 0.004211 | The connection between the case 212 and the end cover 213 fails |
| Comparative Example 7 | 1.8 | 400 | 0.0045 | The connection between the case 212 and the end cover 213 fails |
| Comparative Example 8 | 2 | 450 | 0.004444 | The connection between the case 212 and the end cover 213 fails |

As shown in Table 1, it may be known from the experimental results of Embodiments 1 to 8 and Comparative Examples 1 to 8 that when the ratio of the thickness of the second weak portion 2113 to the energy density of the battery cell 20 is greater than 0.00311, an air pressure under the end cover 213 will be greater than the connection strength between the case 212 and the end cover 213 during the pressure relief of the battery cell 20, which may easily lead to failure of the connection between the case 212 and the end cover 213. When the ratio of the thickness of the second weak portion 2113 to the energy density of the battery cell 20 is less than or equal to 0.003111, it will not cause failure of the connection between the case 212 and the end cover 213 during the pressure relief of the battery cell 20, so that the shell 21 may remain intact. Therefore, the ratio of the thickness of the second weak portion 2113 to the energy density of the battery cell 20 is set to be less than or equal to 0.003.

For example, as can be seen from Table 1, when the ratio of the thickness of the second weak portion 2113 to the energy density of the battery cell 20 is less than 0.0006, the connection failure of the shell 21 no longer occurs during the pressure relief of the battery cell 20. In order to reduce the over-processing phenomenon of the second weak portion 2113, the ratio of the thickness of the second weak portion 2113 to the energy density of the battery cell 20 may be set to be greater than or equal to 0.0006, that is, 0.0006≤D₂/E≤0.003.

Optionally, the ratio of the thickness of the second weak portion 2113 to the energy density of the battery cell 20 may be 0.0006, 0.00067, 0.00075, 0.0008, 0.001, 0.0015, 0.002, 0.003, or the like.

By setting a ratio of the thickness of the second weak portion 2113 to the energy density of the battery cell 20 to be less than or equal to 0.003, the effect of the pressure relief region 2112, after it is opened, flipping around the second weak portion 2113 during pressure relief of the battery cell 20 is improved, thereby being capable of increasing the pressure relief area after the pressure relief region 2112 is opened, so as to reduce the risk of explosion of the battery cell 20 or connection failure of the shell 21 due to insufficient pressure relief area of the battery cell 20.

In some embodiments, referring to FIG. 7, in the thickness direction X of the wall portion, the thickness of the second weak portion 2113 is D₂, and the energy density of the battery cell 20 is E, meeting 0.05 mm<D₂<1.5 mm, and 150 Wh/Kg≤E<450 Wh/Kg.

For example, the thickness D₂ of the second weak portion 2113 may be 0.06 mm, 0.1 mm, 0.2 mm, 0.3 mm, 0.4 mm, 0.5 mm, 0.6 mm, 0.7 mm, 0.8 mm, 1 mm, 1.2 mm, 1.3 mm, 1.4 mm, or the like.

For example, the energy density E of the battery cell 20 may be 150 Wh/Kg, 180 Wh/Kg, 200 Wh/Kg, 250 Wh/Kg, 300 Wh/Kg, 350 Wh/Kg, 400 Wh/Kg, 450 Wh/Kg, or the like.

By setting the thickness of the second weak portion 2113 to be greater than 0.05 mm to improve the structural strength of the second weak portion 2113, it is conducive to reducing the risk of cracking of the second weak portion 2113, so that the pressure relief region 2112, after it is opened, is capable of flipping around the second weak portion 2113. By setting the thickness of the second weak portion 2113 to be less than 1.5 mm, it is conducive to improving the effect of flipping around the second weak portion 2113 after the pressure relief region 2112 is opened, thereby being capable of increasing the pressure relief area after the pressure relief region 2112 is opened, so as to improve the pressure relief rate of the battery cell 20. By setting the energy density of the battery cell 20 to be greater than or equal to 150 Wh/Kg, the battery cell 20 has sufficient energy density, and it is capable of reducing the manufacturing difficulty and cost of the battery cell 20. By setting the energy density of the battery cell 20 to be less than or equal to 450 Wh/Kg, the phenomenon of untimely pressure relief of the battery cell 20 after thermal runaway can be alleviated, which is conducive to improving the reliability in use of the battery cell 20.

In some embodiments, in the thickness direction X of the wall portion, the thickness of the second weak portion 2113 is D₂, and the energy density of the battery cell 20 is E, meeting 0.2 mm≤D₂≤0.8 mm, and 180 Wh/Kg≤E≤350 Wh/Kg.

By setting the thickness of the second weak portion 2113 to be greater than 0.2 mm, on the one hand, it is conducive to reducing the difficulty in processing the second weak portion 2113, and on the other hand, it is capable of further improving the structural strength of the second weak portion 2113, and further reducing the risk of cracking of the second weak portion 2113, so that the pressure relief region 2112, after it is opened, is capable of flipping around the second weak portion 2113. By setting the thickness of the second weak portion 2113 to be less than or equal to 0.8 mm, it is conducive to further improving the effect of flipping around the second weak portion 2113 after the pressure relief region 2112 is opened, thereby being capable of increasing the pressure relief area after the pressure relief region 2112 is opened, so as to improve the pressure relief rate of the battery cell 20. By setting the energy density of the battery cell 20 to be greater than or equal to 180 Wh/Kg, the battery cell 20 further has sufficient energy density, and it is capable of reducing the manufacturing difficulty and cost of the battery cell 20. By setting the energy density of the battery cell 20 to be less than or equal to 350 Wh/Kg to reduce the situation of an excessively large bursting pressure of the battery cell 20, it is further capable of alleviating the phenomenon of untimely pressure relief of the battery cell 20 after thermal runaway, and is conducive to improving the reliability in use of the battery cell 20.

According to some embodiments of the present application, referring to FIG. 4, FIG. 5, FIG. 6, and FIG. 7, the wall portion 211 is provided with a first notch groove 2114, a groove bottom wall 2123 of the first notch groove 2114 forms the first weak portion 2111, and the first notch groove 2114 defines the pressure relief region 2112.

The groove bottom wall 2123 of the first notch groove 2114 forms the first weak portion 2111, that is, the region of the wall portion 211 where the first notch groove 2114 is provided forms the first weak portion 2111, and the first weak portion 2111 is the groove bottom wall 2123 of the first notch groove 2114.

It should be noted that, in other embodiments, the first weak portion 2111 may also be other structures. For example, the structural strength of a local region of the wall portion 211 may be weakened by heat treating the local region of the wall portion 211, so as to form the first weak portion 2111 in the region.

The first notch groove 2114 defines the pressure relief region 2112, that is, a region enclosed by the first notch groove 2114 is the pressure relief region 2112. That is, the first notch groove 2114 is provided along the edge of the pressure relief region 2112.

Optionally, the first notch groove 2114 provided on the wall portion 211 may have various shapes. For example, the first notch groove 2114 may be an arc-shaped structure, a "U"-shaped structure, a "V"-shaped structure, a "Y"-shaped structure, an "X"-shaped structure, or an "H"-shaped structure. For example, in FIG. 5, the first notch groove 2114 is in a double "Y" shape, so that two pressure relief regions 2112 are formed on the wall portion 211.

The first notch groove 2114 is provided on the wall portion 211 so that the groove bottom wall 2123 of the first notch groove 2114 forms the first weak portion 2111. That is, the first weak portion 2111 is formed in a region of the wall portion 211 where the first notch groove 2114 is provided, so that the wall portion 211 is capable of cracking along the first notch groove 2114 to open the pressure relief region 2112. It is convenient for the battery cell 20 with such as structure to form the first weak portion 2111 on the wall portion 211, which is conducive to reducing the difficulty in manufacturing the first weak portion 2111.

According to some embodiments of the present application, referring to FIG. 4 and FIG. 5, the first notch groove 2114 includes a first groove section 2114a, a second groove section 2114b, and a third groove section 2114c, where the first groove section 2114a and the third groove section 2114c are oppositely arranged, the second groove section 2114b connects the first groove section 2114a and the third groove section 2114c, and the first groove section 2114a, the second groove section 2114b, and the third groove section 2114c together define the pressure relief region 2112.

The first groove section 2114a and the third groove section 2114c are oppositely arranged, that is, the first groove section 2114a and the third groove section 2114c are arranged at an interval, and the first groove section 2114a and the third groove section 2114c are not in contact with each other.

The second groove section 2114b connects the first groove section 2114a and the third groove section 2114c, that is, the second groove section 2114b is located between the first groove section 2114a and the third groove section 2114c, and the two ends of the second groove section 2114b are respectively connected to the first groove section 2114a and the third groove section 2114c. Of course, in other embodiments, the second groove section 2114b may also extend out of the first groove section 2114a and the third groove section 2114c in its extension direction.

The first groove section 2114a, the second groove section 2114b, and the third groove section 2114c jointly define the pressure relief region 2112. That is, the first groove section 2114a, the second groove section 2114b, and the third groove section 2114c are capable of enclosing at least one pressure relief region 2112 on the wall portion 211, and the first groove section 2114a, the second groove section 2114b, and the third groove section 2114c are structures arranged along the edge of the pressure relief region 2112, so that the pressure relief region 2112 is capable of being opened with the first groove section 2114a, the second groove section 2114b, and the third groove section 2114c as boundaries. In other words, the pressure relief region 2112 is formed in the region enclosed by the first groove section 2114a, the second groove section 2114b, and the third groove section 2114c, so that the part of the wall portion 211 located in the pressure relief region 2112 is capable of being opened with the first groove section 2114a, the second groove section 2114b, and the third groove section 2114c as the boundaries during the pressure relief of the battery cell 20, thereby releasing the internal pressure of the battery cell 20.

Optionally, the shape of the first notch groove 2114 formed by the first groove section 2114a, the second groove section 2114b, and the third groove section 2114c may be a "U"-shape structure, to form one pressure relief region 2112 on the wall portion 211. Of course, the shape of the first notch groove 2114 formed by the first groove section 2114a, the second groove section 2114b, and the third groove section 2114c may also be an "H"-shaped structure, to form two pressure relief regions 2112 on the wall portion 211, and the two pressure relief regions 2112 are respectively located on both sides of the second groove section 2114b.

The first notch groove 2114 is provided with the first groove section 2114a and the third groove section 2114c which are oppositely arranged, and the second groove section 2114b connecting the first groove section 2114a and the third groove section 2114c, so that the wall portion 211 is capable of cracking along the first groove section 2114a, the second groove section 2114b, and the third groove section 2114c during the pressure relief of the battery cell 20. The first notch groove 2114 with such a structure is conducive to further increasing the pressure relief area of the battery cell 20, so as to improve the pressure relief rate of the battery cell 20.

In some embodiments, referring to FIG. 5, two ends of the second groove section 2114b are connected to one end of the first groove section 2114a and one end of the third groove section 2114c, respectively.

The two ends of the second groove section 2114b are connected to one end of the first groove section 2114a and one end of the third groove section 2114c, respectively, so that the first groove section 2114a, the second groove section 2114b, and the third groove section 2114c are structures connected in sequence, to form the first notch groove 2114 of a "U"-shaped structure.

By connecting the two sides of the second groove section 2114b to one end of the first groove section 2114a and one end of the third groove section 2114c, respectively, so that the first groove section 2114a, the second groove section 2114b, and the third groove section 2114c are structures connected in sequence, and the pressure relief region 2112 is located between the first groove section 2114a, the second groove section 2114b, and the third groove section 2114c to form the first notch groove 2114 of a "U"-shaped structure, thereby facilitating the pressure relief region 2112 to flip around the second weak portion 2113 after being opened.

In some embodiments, still referring to FIG. 5, the first groove section 2114a is provided at an obtuse angle to the second groove section 2114b; and/or the third groove section 2114c is provided at an obtuse angle to the second groove section 2114b.

The first groove section 2114a and the second groove section 2114b are arranged at an obtuse angle, that is, an angle of the connecting position of the first groove section 2114a and the second groove section 2114b is an obtuse angle, so that the first groove section 2114a is a structure inclined in a direction away from the third groove section 2114c. Likewise, the third groove section 2114c and the second groove section 2114b are arranged at an obtuse angle, that is, an angle of the connecting position of the third groove section 2114c and the second groove section 2114b is an obtuse angle, so that the third groove section 2114c is a structure inclined in a direction away from the first groove section 2114a.

Of course, in other embodiments, the first groove section 2114a may also be arranged at an acute angle to the second groove section 2114b; and likewise, the third groove section 2114c is provided at an acute angle to the second groove section 2114b.

By setting the angle between the first groove section 2114a and the second groove section 2114b to an obtuse angle, it is conducive to increase the area of the pressure relief region 2112 and facilitate the pressure relief region 2112, after it is opened, to flip around the second weak portion 2113, thereby increasing the pressure relief area of the pressure relief region 2112 after being opened, and further improving the pressure relief rate of the battery cell 20. Likewise, by setting the angle between the third groove section 2114c and the second groove section 2114b to an obtuse angle, it is conducive to increase the area of the pressure relief region 2112 and facilitate the pressure relief region 2112, after it is opened, to flip around the second weak portion 2113, thereby increasing the pressure relief area of the pressure relief region 2112 after being opened, and further improving the pressure relief rate of the battery cell 20.

According to some embodiments of the present application, referring to FIG. 4 and FIG. 5, the first notch groove 2114 includes two first groove sections 2114a and two third groove sections 2114c, the two first groove sections 2114a are both connected to one end of the second groove section 2114b and are respectively arranged on both sides of the second groove section 2114b, and the two third groove sections 2114c are both connected to one end of the second groove section 2114b and are respectively arranged on both sides of the second groove section 2114b, so that the pressure relief region 2112 is formed on each of both sides of the second groove section 2114b.

The pressure relief regions 2112 located on both sides of the second groove section 2114b share the same second groove section 2114b. For example, in FIG. 5, two first groove sections 2114a are symmetrically arranged on both sides of the second groove section 2114b, and the two first groove sections 2114a are both arranged at an obtuse angle to the second groove section 2114b. Correspondingly, two third groove sections 2114c are symmetrically arranged on both sides of the second groove section 2114b, and the two third groove sections 2114c are both arranged at an obtuse angle to the second groove section 2114b to form a first notch groove 2114 of a double "Y" shaped structure. Of course, in other embodiments, the first notch groove 2114 may also include only one first groove section 2114a and one third groove section 2114c, so that the first notch groove 2114 formed by the first groove section 2114a, the second groove section 2114b, and the third groove section 2114c is a "U"-shaped structure.

The first notch groove 2114 is provided with two first groove sections 2114a and two third groove sections 2114c, the two first groove sections 2114a are respectively located on both sides of the second groove section 2114b, and the two third groove sections 2114c are respectively located on both sides of the second groove section 2114b, so that the pressure relief region 2112 is capable of being formed on each of both sides of the second groove section 2114b, and the two pressure relief regions 2112 are capable of being opened in a split manner for pressure relief during the pressure relief of the battery cell 20, which is conducive to further increasing the pressure relief effect of the battery cell 20 and can effectively improve the pressure relief rate of the battery cell 20.

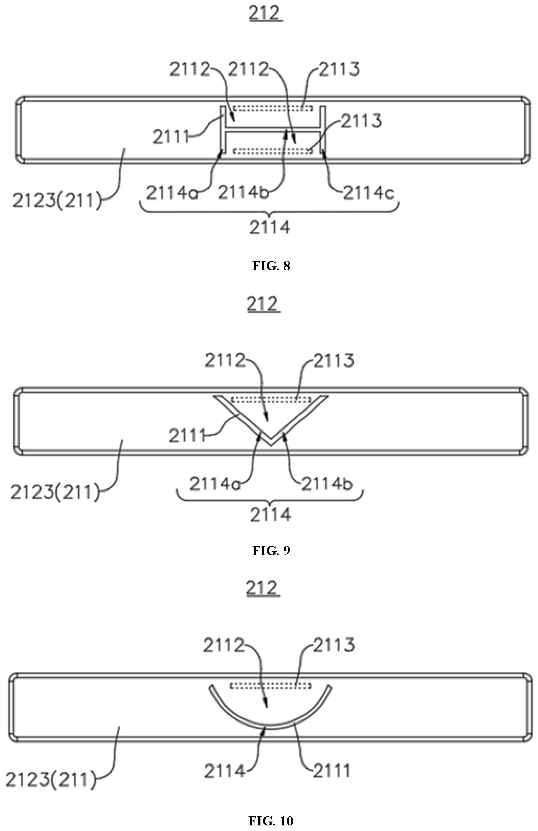

According to some embodiments of the present application, referring to FIG. 8, FIG. 8 is a bottom view of a case 212 of a shell 21 of a battery cell 20 according to other embodiments of the present application; The connection position of the first groove section 2114a and the second groove section 2114b deviates from the two ends of the first groove section 2114a, and the connection position of the third groove section 2114c and the second groove section 2114b deviates from the two ends of the third groove section 2114c, so that the pressure relief region 2112 is formed on each of both sides of the second groove section 2114b.

The connection position of the first groove section 2114a and the second groove section 2114b deviates from the two ends of the first groove section 2114a, that is, the second groove section 2114b is connected between the two ends of the first groove section 2114a. Likewise, the connection position of the third groove section 2114c and the second groove section 2114b deviates from the two ends of the third groove section 2114c, that is, the second groove section 2114b is connected between the two ends of the third groove section 2114c, so that the shape of the first notch groove 2114 formed by the first groove section 2114a, the second groove section 2114b, and the third groove section 2114c is an approximately "H"-shaped structure. That is, the extension direction of the second groove section 2114b may be parallel to the arrangement direction of the first groove section 2114a and the third groove section 2114c, or may be set at a non-zero angle.

By setting the connection position of the first groove section 2114a and the second groove section 2114b to be located between the two ends of the first groove section 2114a, and setting the connection position of the third groove section 2114c and the second groove section 2114b to be located between the two ends of the third groove section 2114c, the first groove section 2114a, the second groove section 2114b, and the third groove section 2114c form a structure similar to an "H" shape, so that the pressure relief region 2112 is capable of being formed on each of both sides of the second groove section 2114b of the first notch groove 2114, and the two pressure relief regions 2112 are capable of being opened in a split manner for pressure relief during the pressure relief of the battery cell 20, which is conducive to further increasing the pressure relief effect of the battery cell 20 and can effectively improve the pressure relief rate of the battery cell 20.

In some embodiments, still referring to FIG. 8, the first groove section 2114a and the third groove section 2114c are both arranged perpendicular to the second groove section 2114b. That is, the extension direction of the second groove section 2114b is perpendicular to the extension directions of the first groove section 2114a and the third groove section 2114c, so that the shape of the first notch groove 2114 formed by the first groove section 2114a, the second groove section 2114b, and the third groove section 2114c is an "H"-shaped structure, and two pressure relief regions 2112 are formed on both sides of the second groove section 2114b. Of course, the areas of the two pressure relief region 2112 may be the same or different.

By setting the first groove section 2114a and the third groove section 2114c to be both perpendicular to the second groove section 2114b, so that an extension direction of the second groove section 2114b is an arrangement direction of the first groove section 2114a and the third groove section 2114c, on the one hand, the regularity of the shape of the first notch groove 2114 is capable of being improved, which is conducive to reduce the difficulty in processing the first notch groove 2114, so as to reduce the manufacturing cost of the battery cell 20; on the other hand, it is convenient for the two pressure relief regions 2112 whose wall portions 211 are located on both sides of the second groove section 2114b to relieve pressure in opposite directions during the pressure relief of the battery cell 20.

According to some embodiments of the present application, referring to FIG. 9, FIG. 9 is a bottom view of a case 212 of a shell 21 of a battery cell 20 according to still other embodiments of the present application. The first notch groove 2114 includes a first groove section 2114a and a second groove section 2114b interconnected to each other, an extension direction of the first groove section 2114a intersects an extension direction of the second groove section 2114b, and the first groove section 2114a and the second groove section 2114b together define the pressure relief region 2112.

The extension direction of the first groove section 2114a intersects with the extension direction of the second groove section 2114b, that is, the first groove section 2114a and the second groove section 2114b form an intersecting structure to form a pressure relief region 2112 in the region between the first groove section 2114a and the second groove section 2114b. Optionally, the shape of the first notch groove 2114 formed by the intersection of the first groove section 2114a and the second groove section 2114b may be a "V"-shaped structure, a "T"-shaped structure, an "L"-shaped structure, an "X"-shaped structure, or the like.

By setting the first notch groove 2114 to have the first groove section 2114a and the second groove section 2114b that intersect with each other, and the first groove section 2114a and the second groove section 2114b together define the pressure relief region 2112, on the one hand, the pressure relief area of the battery cell 20 is capable of being increased to increase the pressure relief rate of the battery cell 20, and on the other hand, an intersection position of the first groove section 2114a and the second groove section 2114b is made weaker, and is easier to crack and open the pressure relief region 2112 to relieve the internal pressure of the battery cell 20.

In some embodiments, referring to FIG. 9, one end of the first groove section 2114a is connected to one end of the second groove section 2114b.

One end of the first groove section 2114a is connected to one end of the second groove section 2114b, that is, the first groove section 2114a and the second groove section 2114b are structures connected in sequence, so that the shape of the first notch groove 2114 formed by the intersection of the first groove section 2114a and the second groove section 2114b is a "V"-shaped structure.

By connecting the one end of the first groove section 2114a to one end of the second groove section 2114b, so that the first groove section 2114a and the second groove section 2114b are structures connected in sequence, and the first groove section 2114a and the second groove section 2114b form a "V"-shaped structure, which facilitates the pressure relief region 2112 formed between the first groove section 2114a and the second groove section 2114b to flip around the second weak portion 2113 after being opened.

According to some embodiments of the present application, referring to FIG. 10, FIG. 10 is a bottom view of a case 212 of a shell 21 of a battery cell 20 according to yet other embodiments of the present application. The first notch groove 2114 is a groove extending along an arc trajectory. That is, the first notch groove 2114 is an arc-shaped groove structure.

For example, in FIG. 10, the shape of the first notch groove 2114 is a "C"-shaped structure, so that a pressure relief region 2112 is formed on an inner side of the arc of the first notch groove 2114.

By setting the first notch groove 2114 to be a structure extending along an arc trajectory so that the pressure relief region 2112 is formed on one side of the first notch groove 2114, the first notch groove 2114 with such a structure is convenient for manufacturing and molding, and is conducive to reducing the difficulty in manufacturing the battery cell 20.

According to some embodiments of the present application, referring to FIG. 4, FIG. 5, and FIG. 6, in the thickness direction X of the wall portion, the first notch groove 2114 is provided on one side of the wall portion 211 facing away from the interior of the shell 21.

The first notch groove 2114 is provided on the side of the wall portion 211 away from the interior of the shell 21, that is, the first notch groove 2114 is provided on a surface of one side of the wall portion 211 away from the electrode assembly 22 in the thickness direction X of the wall portion. Of course, in other embodiments, the first notch groove 2114 may also be arranged on the side of the wall portion 211 facing the electrode assembly 22.

By arranging the first notch groove 2114 on the side of the wall portion 211 facing away from the interior of the shell 21, the first notch groove 2114 is a structure formed on the outside of the shell 21, which facilitates processing and manufacturing of the first notch groove 2114 from the outside of the shell 21, and helps reduce the difficulty in processing the first notch groove 2114.

According to some embodiments of the present application, referring to FIG. 4, FIG. 5, FIG. 6, and FIG. 7, the first notch groove 2114 is a multi-step groove structure arranged in the thickness direction X of the wall portion.

The first notch groove 2114 is the multi-step groove structure arranged in the thickness direction X of the wall portion, that is, the first notch groove 2114 is a step groove structure formed by multiple stamping. For example, in FIG. 7, the first notch groove 2114 is a three-step groove structure. Of course, in other embodiments, the first notch groove 2114 may also be a two-step groove, a four- step groove, a five- step groove, a six- step groove, or the like.

It should be noted that in the embodiment where the first notch groove 2114 includes a first groove section 2114a, a second groove section 2114b, and a third groove section 2114c, the corresponding first groove section 2114a, second groove section 2114b, and third groove section 2114c are all multi-step groove structures.

By setting the first notch groove 2114 as the multi-step groove arranged in the thickness direction X of the wall portion, so that the first notch groove 2114 is a groove structure formed by multiple times of processing, the battery cell 20 with such a structure, on the one hand, is capable of reducing the depth of the first notch groove 2114 in a single processing, which is conducive to reducing the difficulty in manufacturing the first notch groove 2114 and the demand for a manufacturing device, so as to reduce the manufacturing cost, and is capable of reducing a forming force exerted on the wall portion 211 during the single processing of the first notch groove 2114, which is conducive to reducing the risk of cracks in the wall portion 211, so as to improve the production quality of the battery cell 20. On the other hand, it is capable of improving a material flow pattern of the first notch groove 2114 in the formation process, which is beneficial for the flow of a material generated when forming the first notch groove 2114, so as to improve the structural consistency of the first notch groove 2114.

According to some embodiments of the present application, referring to FIG. FIG. 5, FIG. 6, and FIG. 7, the wall portion 211 is provided with a second notch groove 2115, a groove bottom wall 2123 of the second notch groove 2115 forms the second weak portion 2113.

The groove bottom wall 2123 of the second notch groove 2115 forms the second weak portion 2113, that is, the region of the wall portion 211 where the second notch groove 2115 is provided forms the second weak portion 2113, and the second weak portion 2113 is the groove bottom wall 2123 of the second notch groove 2115.

It should be noted that, in other embodiments, the second weak portion 2113 may also be other structures. For example, the structural strength of a local region of the wall portion 211 may be weakened by heat treating the local region of the wall portion 211, so as to form the second weak portion 2113 in the region.

The second notch groove 2115 is provided on the wall portion 211 so that the groove bottom wall 2123 of the second notch groove 2115 forms the second weak portion 2113. That is, the second weak portion 2113 is formed in a region of the wall portion 211 where the second notch groove 2115 is provided, so that the pressure relief region 2112, after it is opened, is capable of flipping around the groove bottom wall 2123 of the second notch groove 2115. It is convenient for the battery cell 20 with such as structure to form the second weak portion 2113 on the wall portion 211, which is conducive to reducing the difficulty in manufacturing the second weak portion 2113.

In some embodiments, still referring to FIG. 5, FIG. 6, and FIG. 7, in the thickness direction X of the wall portion, the second notch groove 2115 is arranged on one side of the wall portion 211 facing the interior of the shell 21.

The second notch groove 2115 is provided on the side of the wall portion 211 facing the interior of the shell 21, that is, the second notch groove 2115 is provided on a surface of the wall portion 211 facing the electrode assembly 22. Of course, in other embodiments, the second notch groove 2115 may also be arranged on the side of the wall portion 211 facing away from the electrode assembly 22.

For example, in FIG. 5, the second notch groove 2115 is a strip-shaped structure and is parallel to the second groove section 2114b, so that the second weak portion 2113 is a strip-shaped structure, thereby facilitating the pressure relief region 2112 to flip around the second weak portion 2113.

The second notch groove 2115 is provided on the side of the wall portion 211 facing the interior of the shell 21, so that the pressure relief region 2112, when opened, can flip toward the outside of the shell 21 around the groove bottom wall 2123 of the second notch groove 2115, thereby reducing an interference effect of a groove side surface of the second notch groove 2115 on the pressure relief region 2112 during the flipping, which is conducive to improving the flipping effect of the pressure relief region 2112.

According to some embodiments of the present application, referring to FIG. 5, FIG. 6, and FIG. 7, the first notch groove 2114 and the second notch groove 2115 are provided on the wall portion 211, the groove bottom wall 2123 of the first notch groove 2114 forms the first weak portion 2111, the groove bottom wall 2123 of the second notch groove 2115 forms the second weak portion 2113, and the first notch groove 2114 and the second notch groove 2115 are not in contact.

The groove bottom wall 2123 of the first notch groove 2114 forms the first weak portion 2111, that is, the region of the wall portion 211 where the first notch groove 2114 is provided forms the first weak portion 2111, and the first weak portion 2111 is the groove bottom wall 2123 of the first notch groove 2114.

The groove bottom wall 2123 of the second notch groove 2115 forms the second weak portion 2113, that is, the region of the wall portion 211 where the second notch groove 2115 is provided forms the second weak portion 2113, and the second weak portion 2113 is the groove bottom wall 2123 of the second notch groove 2115.

The first notch groove 2114 and the second notch groove 2115 are not in contact with each other, that is, the first notch groove 2114 and the second notch groove 2115 are not connected to each other, and the first notch groove 2114 and the second notch groove 2115 are structures independently provided. Optionally, there may be multiple structures in which the first notch groove 2114 and the second notch groove 2115 are not in contact with each other. It may be a structure in which the first notch groove 2114 and the second notch groove 2115 are respectively provided on both sides of the wall portion 211 in the thickness direction X of the wall portion, or it may be a structure in which the first notch groove 2114 and the second notch groove 2115 are provided on the same side of the wall portion 211 in the thickness direction X of the wall portion and are not connected to each other.

By arranging the first notch groove 2114 and the second notch groove 2115 on the wall portion 211, the first weak portion 2111 and the second weak portion 2113 are respectively formed in the regions of the wall portion 211 where the first notch groove 2114 and the second notch groove 2115 are arranged, the structure is simple, and is convenient for manufacturing. In addition, by setting the first notch groove 2114 and the second notch groove 2115 as structures that do not contact each other, on the one hand, the mutual influence between the first notch groove 2114 and the second notch groove 2115 during the processing is capable of being reduced, and on the other hand, the phenomenon of causing the second weak portion 2113 to crack when the first weak portion 2111 cracks for pressure relief can be reduced, and the stress influence between the first weak portion 2111 and the second weak portion 2113 can be reduced.

In some embodiments, referring to FIG. 6 and FIG. 7, in the thickness direction X of the wall portion, the first notch groove 2114 and the second notch groove 2115 are arranged on both sides of the wall portion 211, respectively.

For example, the first notch groove 2114 is provided on the side of the wall portion 211 away from the interior of the shell 21 in the thickness direction X of the wall portion, that is, the first notch groove 2114 is provided on the side of the wall portion 211 away from the electrode assembly 22 in the thickness direction X of the wall portion. The second notch groove 2115 is provided on the side of the wall portion 211 facing the interior of the shell 21 in the thickness direction X of the wall portion, that is, the second notch groove 2115 is provided on the side of the wall portion 211 facing the electrode assembly 22 in the thickness direction X of the wall portion.

It should be noted that in other embodiments, the first notch groove 2114 may be provided on the side of the wall portion 211 facing the interior of the shell 21 in the thickness direction X of the wall portion, and correspondingly, the second notch groove 2115 may be provided on the side of the wall portion 211 facing away from the interior of the shell 21 in the thickness direction X of the wall portion.

By arranging the first notch groove 2114 and the second notch groove 2115 on both sides of the wall portion 211 respectively, the first notch groove 2114 and the second notch groove 2115 do not contact each other, and it is convenient to process the first notch groove 2114 and the second notch groove 2115, which is conducive to reducing the mutual influence of the first notch groove 2114 and the second notch groove 2115 during the processing.

According to some embodiments of the present application, as shown in FIG. 3 and FIG. 4, the shell 21 may include a case 212 and an end cover 213. The case 212 includes a side wall 2124 and a bottom wall 2123 that are integrally formed. The side wall 2124 encloses the periphery of the bottom wall 2123, one end of the side wall 2124 connected to the bottom wall 2123 and the other end encloses to form an opening 2122. The side wall 2124 and the bottom wall 2123 together define an accommodating cavity 2121 for accommodating the electrode assembly 22, and the end cover 213 closes the opening 2122. The bottom wall 2123 is the wall portion 211.

The bottom wall 2123 is the wall portion 211, that is, the wall portion 211 is a wall of the case 212 provided opposite to the end cover 213 in the thickness direction X of the wall portion, that is, the first weak portion 2111 and the second weak portion 2113 are both provided on the bottom wall 2123 of the case 212.

The case 212 includes the side wall 2124 and the bottom wall 2123 that are integrally formed, that is, the case 212 is manufactured by an integral molding process, for example, an integral molding process such as stamping, casting, or extrusion molding. That is, the side wall 2124 and the bottom wall 2123 of the case 212 are of an integral structure.

By arranging the wall portion 211 as a wall of the case 212 arranged opposite to the end cover 213 in the thickness direction X of the wall portion, the battery cell 20 with such a structure is capable of causing the regions of the shell 21 where the first weak portion 2111 and the second weak portion 2113 are provided far from the end cover 213, and causing that there is no direct connection relationship between the wall portion 211 and the end cover 213, thereby being capable of alleviating the influence of the stress generated during interconnection of the end cover 213 and the case 212 on the first weak portion 2111 and the second weak portion 2113, so as to reduce the phenomenon of cracking or reduction in structural strength the first weak portion 2111 and the second weak portion 2113, and further be capable of effectively reducing the situation of prematurely opening the valve for pressure relief of the battery cell 20, so as to improve the stability and service life of the battery cell 20.

It should be noted that the structure of the battery cell 20 is not limited thereto. In some embodiments, the battery cell 20 may also be of another structure, for example, the shell 21 may include a case 212 and an end cover 213. An accommodating cavity 2121 with an opening 2122 is formed in the interior of the case 212, the accommodating cavity 2121 is configured to accommodate an electrode assembly 22. The end cover 213 closes the opening 2122, and the end cover 213 is the wall portion 211. That is, the first weak portion 2111 and the second weak portion 2113 are both provided on the end cover 213 of the shell 21.

By setting the wall portion 211 of the shell 21 as the end cover 213 of the shell 21 for closing the opening 2122 of the case 212, the battery cell 20 with such a structure is conducive to processing to form the first weak portion 2111 and the second weak portion 2113 on the end cover 213, which is capable of effectively reducing the difficulty in processing the first weak portion 2111 and the second weak portion 2113 on the shell 21 of the battery cell 20, so as to improve the production efficiency of the battery cell 20.

According to some embodiments, the present application further provides a battery 100, and the battery 100 includes the battery cell 20 according to any one of the above solutions.

Referring to FIG. 2, the battery 100 may further include a box body 10, and the battery cell 20 is accommodated in the box body 10.

In some embodiments, the box body 10 may include a first box body 11 and a second box body 12. The first box body 11 and the second box body 12 cover each other, and the first box body 11 and the second box body 12 together define an assembling space for accommodating the battery cell 20.

Optionally, the second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box body 10 formed by the first box body 11 and the second box body 12 may be in various shapes, such as a cylinder or a cuboid. Exemplarily, in FIG. 2, the box body 10 is of a cuboid structure.

Optionally, one or a plurality of battery cells 20 may be arranged in the box body 10. Exemplarily, in FIG. 2, a plurality of battery cells 20 are arranged in the box body 10 of the battery 100, and the plurality of battery cells 20 may be connected in series, parallel or series and parallel, where the series-parallel connection means that some of the plurality of battery cells 20 are connected in series and some are connected in parallel. The plurality of battery cells 20 may be directly connected in series, parallel or series and parallel together, and then, the whole formed by the plurality of battery cells 20 is accommodated in the box body 10. Of course, the battery 100 may also be in the form of a battery module composed of a plurality of battery cells 20 in series, parallel or series and parallel first, and then, a plurality of battery modules are connected in series, parallel or series and parallel to form a whole which is accommodated in the box body 10.

The battery 100 may further include other structures. For example, the battery 100 may further include a convergence component, and the plurality of battery cells 20 may be connected through the convergence component so as to achieve electrical connection between the plurality of battery cells 20.

It should be noted that in some embodiments, the battery 100 may not be provided with a box body 10. The battery 100 includes a plurality of battery cells 20, and the battery 100 composed of the plurality of battery cells 20 may be directly assembled on an electrical apparatus to provide electric energy to the electrical apparatus through the plurality of battery cells 20. In other words, the box body 10 may be used as a part of the electrical apparatus. The electrical apparatus is, for example, a vehicle 1000, and the box body 10 may be used as a part of a chassis structure of the vehicle 1000. For example, a part of the box body 10 may become at least a part of a floor of the vehicle 1000, or a part of the box body 10 may become at least a part of a cross beam and a longitudinal beam of the vehicle 1000.

According to some embodiments of the present application, the present application further provides an electrical apparatus, the electrical apparatus includes a battery cell 20 according to any one of the above solutions, and the battery cell 20 is configured to provide electric energy to the electrical apparatus.

The electrical apparatus may be any one of the above devices or systems applying the battery cell 20.

According to some embodiments, referring to FIG. 3 to FIG. 7, the present application provides a battery cell 20, and the battery cell 20 includes a shell 21 and an electrode assembly 22. The shell 21 has a wall portion 211, and the shell 21 includes a case 212 and an end cover 213. The case 212 includes a side wall 2124 and a bottom wall 2123 formed integrally. The side wall 2124 encloses the periphery of the bottom wall 2123. In the thickness direction X of the wall portion, one end of the side wall 2124 is connected to the bottom wall 2123, and the other end of the side wall 2124 encloses to form the opening 2122. The side wall 2124 and the bottom wall 2123 jointly define the accommodating cavity 2121, and the electrode assembly 22 is accommodated in the accommodating cavity 2121. The end cover 213 closes the opening 2122, and the bottom wall 2123 is the wall portion 211. The wall portion 211 is provided with the first weak portion 2111 and the pressure relief region 2112, the wall portion 211 is configured to be capable of cracking along the first weak portion 2111 to open the pressure relief region 2112. The wall portion 211 is further provided with the second weak portion 2113, and the pressure relief region 2112 is configured to be capable of flipping around the second weak portion 2113 when the first weak portion 2111 cracks, so as to relieve the internal pressure of the battery cell 20. The wall portion 211 is provided with the first notch groove 2114, the groove bottom wall 2123 of the first notch groove 2114 forms the first weak portion 2111, the first notch groove 2114 defines the pressure relief region 2112, and the first notch groove 2114 is a multi-step groove structure arranged in the thickness direction X of the wall portion. The first notch groove 2114 includes two first groove sections 2114a, one second groove section 2114b, and two third groove sections 2114c, the two first groove sections 2114a each have one end connected to one end of the second groove section 2114b and are symmetrically arranged on both sides of the second groove section 2114b, and the two third groove sections 2114c each have one end connected to one end of the second groove section 2114b away from the first groove section 2114a and are symmetrically arranged on both sides of the second groove section 2114b, so that the pressure relief region 2112 is formed on each of both sides of the second groove section 2114b. The first groove section 2114a is provided at an obtuse angle to the second groove section 2114b, and the third groove section 2114c is provided at an obtuse angle to the second groove section 2114b. The wall portion 211 is provided with the second notch groove 2115, the groove bottom wall 2123 of the second notch groove 2115 forms the second weak portion 2113, and the second notch groove 2115 is parallel to and spaced from the second groove section 2114b. In the thickness direction X of the wall portion, the first notch groove 2114 is provided on the side of the wall portion 211 facing away from the electrode assembly 22, and the second notch groove 2115 is provided on the side of the wall portion 211 facing the electrode assembly 22. In the thickness direction X of the wall portion, the thickness of the first weak portion 2111 is D₁, and the thickness of the second weak portion 2113 is D₂, meeting D₁<D₂. The thickness of the second weak portion 2113 is D₂, in a unit of mm, and the energy density of the battery cell 20 is E, in a unit of Wh/Kg, meeting: 0.0006≤D₂/E≤0.003, 0.2 mm≤D₂≤0.8 mm, and 180 Wh/Kg≤E≤350 Wh/Kg.

It should be noted that in the case of no conflict, the embodiments in the present application and the features in the embodiments may be combined with each other.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery cell, comprising:
a shell having a wall portion, the wall portion being provided with a first weak portion and a pressure relief region, and the wall portion being configured to be capable of cracking along the first weak portion to open the pressure relief region,
wherein the wall portion is further provided with a second weak portion, and the pressure relief region is configured to be capable of flipping around the second weak portion when the first weak portion cracks, so as to relieve an internal pressure of the battery cell.

2. The battery cell according to claim 1, wherein in a thickness direction of the wall portion, a thickness of the first weak portion is D₁, and a thickness of the second weak portion is D₂, meeting D₁<D₂.

3. The battery cell according to claim 1 or 2, wherein in the thickness direction of the wall portion, a thickness of the second weak portion is D₂, in a unit of mm, and an energy density of the battery cell is E, in a unit of Wh/Kg, meeting D₂/E≤0.003.

4. The battery cell according to claim 3, wherein in the thickness direction of the wall portion, the thickness of the second weak portion is D₂, and the energy density of the battery cell is E, meeting 0.05 mm<D₂<1.5 mm, and 150 Wh/Kg≤E<450 Wh/Kg.

5. The battery cell according to claim 4, wherein 0.2 mm≤D₂≤0.8 mm, 180 Wh/Kg≤E≤350 Wh/Kg.

6. The battery cell according to any one of claims 1 to 5, wherein the wall portion is provided with a first notch groove, a groove bottom wall of the first notch groove forms the first weak portion, and the first notch groove defines the pressure relief region.

7. The battery cell according to claim 6, wherein the first notch groove comprises a first groove section, a second groove section, and a third groove section, the first groove section and the third groove section are oppositely arranged, the second groove section connects the first groove section and the third groove section, and the first groove section, the second groove section, and the third groove section together define the pressure relief region.

8. The battery cell according to claim 7, wherein two ends of the second groove section are connected to one end of the first groove section and one end of the third groove section, respectively.

9. The battery cell according to claim 8, wherein the first groove section is provided at an obtuse angle to the second groove section; and/or
the third groove section is provided at an obtuse angle to the second groove section.

10. The battery cell according to claim 8 or 9, wherein the first notch groove comprises two first groove sections and two third groove sections, the two first groove sections are both connected to one end of the second groove section and are respectively arranged on both sides of the second groove section, and the two third groove sections are both connected to one end of the second groove section and are respectively arranged on both sides of the second groove section, so that the pressure relief region is formed on each of both sides of the second groove section.

11. The battery cell according to claim 7, wherein the connection position of the first groove section and the second groove section deviates from the two ends of the first groove section, and the connection position of the third groove section and the second groove section deviates from the two ends of the third groove section, so that the pressure relief region is formed on each of both sides of the second groove section.

12. The battery cell according to claim 11, wherein the first groove section and the third groove section are both perpendicular to the second groove section.

13. The battery cell according to claim 6, wherein the first notch groove comprises a first groove section and a second groove section interconnected to each other, an extension direction of the first groove section intersects an extension direction of the second groove section, and the first groove section and the second groove section together define the pressure relief region.

14. The battery cell according to claim 13, wherein one end of the first groove section is connected to one end of the second groove section.

15. The battery cell according to claim 6, wherein the first notch groove is a groove extending along an arc trajectory.

16. The battery cell according to any one of claims 6 to 15, wherein in the thickness direction of the wall portion, the first notch groove is provided on one side of the wall portion facing away from an interior of the shell.

17. The battery cell according to any one of claims 6 to 16, wherein the first notch groove is a multi-step groove structure arranged in the thickness direction of the wall portion.

18. The battery cell according to any one of claims 1 to 17, wherein the wall portion is provided with a second notch groove, a groove bottom wall of the second notch groove forms the second weak portion.

19. The battery cell according to claim 18, wherein in the thickness direction of the wall portion, the second notch groove is provided on one side of the wall portion facing the interior of the shell.

20. The battery cell according to any one of claims 1 to 19, wherein the wall portion is provided with a first notch groove and a second notch groove, a groove bottom wall of the first notch groove forms the first weak portion, and a groove bottom wall of the second notch groove forms the second weak portion,
wherein the first notch groove and the second notch groove are not in contact.

21. The battery cell according to claim 20, wherein in the thickness direction of the wall portion, the first notch groove and the second notch groove are arranged on both sides of the wall portion, respectively.

22. The battery cell according to any one of claims 1 to 21, wherein the shell comprises:
a case comprising a side wall and a bottom wall formed integrally, wherein the side wall encloses the periphery of the bottom wall, one end of the side wall is connected to the bottom wall, and the other end encloses to form an opening, and the side wall and the bottom wall together define an accommodating cavity for accommodating an electrode assembly; and
an end cover closing the opening,
wherein the bottom wall is the wall portion.

23. The battery cell according to any one of claims 1 to 21, wherein the shell comprises:
a case having an accommodating cavity with an opening formed in an interior thereof, the accommodating cavity being configured to accommodate an electrode assembly; and
an end cover closing the opening,
wherein the end cover is the wall portion.

24. A battery, comprising the battery cell according to any one of claims 1 to 23.

25. An electrical apparatus, comprising the battery cell according to any one of claims 1 to 23, wherein the battery cell is configured to provide electric energy.
